(19) Europäisches Patentamt
European Patent Office
Office européen des brevets

(11) Publication number: 0 147 947
A1

# (12) EUROPEAN PATENT APPLICATION

(21) Application number: 84308151.4

(22) Date of filing: 23.11.84

(51) Int. Cl.[4]: A 01 N 25/22
A 01 N 53/00
//(A01N53/00, 37:48, 37:40)

(30) Priority: 05.12.83 HU 415383

(43) Date of publication of application:
10.07.85 Bulletin 85/28

(84) Designated Contracting States:
AT CH DE FR GB IT LI NL

(71) Applicant: CHINOIN Gyogyszer és Vegyészeti Termékek Gyára RT.
To utca 1-5
H-1045 Budapest IV(HU)

(72) Inventor: Soós, Rudolf, Dr.
12 Hunyadi Lejtő
H-1121 Budapest(HU)

(72) Inventor: Kolta, Rezsö, Dr.
18 Mester U
H-1095 Budapest(HU)

(72) Inventor: Ganovszky, Jolán
Felsőőr U
H-1142 Budapest(HU)

(72) Inventor: Somfai, Eva, Dr.
8 Táncscis M U
H-1014 Budapest(HU)

(72) Inventor: Erdős, Gyula, Dr.
44 Pozsonyi U
H-1133 Budapest(HU)

(72) Inventor: Koncz, Agnes, Dr.
35 Kisrókus U
H-1024 Budapest(HU)

(72) Inventor: Kecskeméti, István
18 Szirom U
H-2600 Vac(HU)

(72) Inventor: Bozzay, József, Dr.
5 Sanc U
H-1016 Budapest(HU)

(74) Representative: Skailes, Humphrey John et al,
Frank B. Dehn & Co. Imperial House 15-19 Kingsway
London WC2B 6UZ(GB)

## (54) Insecticidal composition.

(57) The invention relates to insecticidal compositions having a prolonged duration of effect comprising at least one pyrethroid as active ingredient and an α-hydroxybenzoic acid or ester thereof as photostabilizer or synergistic component.

EP 0 147 947 A1

# INSECTICIDAL COMPOSITION

This invention relates to insecticidal compositions, a process for the preparation thereof, a method controlling insects and a method for the photostabilization of pyrethroid compounds.

According to an aspect of the present invention there are provided insecticidal compositions of a prolonged duration of effect comprising as active ingredient at least one pyrethroid compound and optionally further active ingredient(s) and additive(s). The characteristic feature of the said compositions is that they comprise as photostabilizer or synergistic (promoting) component, a benzoic acid derivative of the general formula I

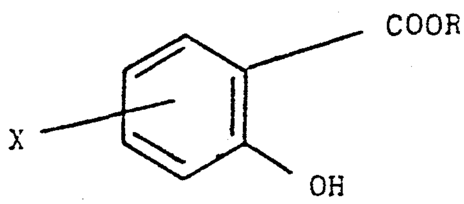

(I)

e.g. in an amount of 0.01-10 parts by weight per part by weight of the pyrethroid compound(s).

In the general formula I

R is hydrogen, $C_{1-20}$ alkyl, $C_{2-6}$ alkenyl, or a group of the general formula $-[(CH_2)_nO]_mH$; in which

n is an integer of 2 to 4; or

a group of the general formula II;

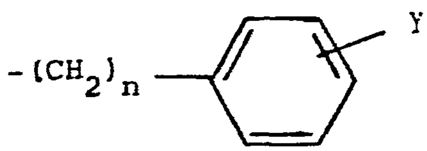

(II)

wherein

n is an integer of 0 to 6 and

X and Y are hydrogen, halogen, nitro or $C_{1-4}$ alkyl.

The term "pyrethroid compound" used throughout the specification relates to natural or synthetic - optionally substituted - dimethyl cyclopropane carboxylic acid esters and compounds of the fenvalerate type.

It is known that the field of application of insecticidal agents comprising various pyrethroids is significantly limited by the restricted duration of activity of the said compositions.

This is due to the fact that although pyrethroid compounds are very stable under the exclusion of light, in the presence of light their decomposition takes place very rapidly and consequently the insecticidal activity of the composition is lost promptly after use.

This disadvantageous property is responsible for the limited use of the earlier synthesized members of the pyrethroid group (bioresmethrin, tetramethrin etc.) in agriculture for the killing of insect pests. The said active ingredients are used particularly in compositions used against sanitary insect pests, when prompt

action is required (e.g. aerosols) and when the duration of the effect is not a primary requirement.

The photodegradation of pyrethroids is to some extent suppressed by the "shadowing" effect of the carriers present in the compositions in suspension form. This effect is only slight however in the case of emulsifiable concentrates generally used in agriculture for their other advantageous properties.

Efforts were made to increase the photostability of pyrethroids by using these active ingredients in microencapsulated form /‾Pest control 47, (6), 14-20, (1979)_7. The drawback of this method is that it made the compositions so expensive that they can be only used for sanitary purposes.

The photodegradation of the so-called second generation pyrethroids (e.g. permethrin, deltamethrin, fenvalerate, cypermethrin etc.) is also considerable. Permethrin - the most important representative of the so-called "photostable pyrethroid group" - loses its activity e.g. in tests on various specimens about twice as rapidly if illuminated by 600 lux than if stored in the dark /‾Permethrin, The Wellcome Foundation, (1975)_7.

According to prior art various stabilizers were used in pyrethroidal compositions but they failed to achieve the desired result /‾US Patents Nos. 3.893.561 and 4.056.610; Japanese patent application KOKAI No. 73.98023 and Pyrethrum Post 11, 135 (1972)_7.

The composition of the present invention preserves its insecticidal activity after use for a significantly longer period of time than the composition comprising no additive of the present invention.

It has been found that the duration of effect of the composition of the present invention surpasses that of the known compositions comprising no such additive only under natural illumination. If the samples are compared in the dark no difference is observed. This indicates that the stabilizers of the present invention decrease and inhibit the photodegradation of the pyrethroid active ingredient.

The above is illustrated by the following data:

Several benzoic acid derivatives of the general formula I are dissolved in methyl ethyl ketone and solutions are prepared which correspond to a pyrethroid : stabilizer weight ratio of 25:1, 5:1 and 1:1 and which contain no stabilizer, respectively. Four roughened Petri-dishes are impregnated with each sample. After the evaporation of the solvent two of the four Petri-dishes are kept until the beginning of the test in the dark and the remaining two Petri-dishes are exposed to the light of a mercury vapour lamp (HGO-125); the time of illumination depends on the pyrethroid used. The spectrum of the light-source used is qualitatively identical with that of sunlight, but it is more active from the point of view of photodegradation, the ratio of ultraviolet radiation having a higher wave-length being higher. Thus the mercury vapour lamp used allows accelerated photostability testing.

Twenty female domestic flies (Musca domestica) are placed under the plastic lid of each Petri-dish on glass slides either kept in the dark or illuminated and the number of the killed flies is read off for two hours every minute.

The $LT_{50}$ values (time required to kill 50 % of the fly population) is calculated from the mortality data of two parallel tests with the aid of the probit transformation method. The shorter periods of time correspond to a higher active ingredient concentration on the slide.

In order to carry out the comparison under proper conditions, the $LT_{50}$ should be a still measurable value even on the exposed samples comprising no stabilizer; it is also necessary to test active ingredients of completely different photostability. For this reason the time of photoexposure of the sample is varied depending on the character of the pyrethroid so that on slides comprising no stabilizer the photodegradation should inactivate only about 95.0-99.5 % of the active ingredient. The tests are carried out on series of slides impregnated with two different pyrethroid concentrations.

The $LT_{50}$ values measured on slides impregnated with various pyrethroids and mixtures of pyrethroids and ethylene glycol mono-salicylate, respectively, are determined at a pyrethroid concentration of 140 $\mu g/cm^2$ (Table 1) and 28 $\mu g/cm^2$ (Table 2). The photostability data of mixtures of benzyl salicylate and tetramethrin are summarized in Table 3 (concentration: 140 and 28 $\mu g/cm^2$). The photostability data of mixtures of tetramethrin and

phenyl salicylate are disclosed in Table 4, while those of mixtures of tetramethrin and cis-hexenyl-salicylate in Table 5.

It appears from the said Tables that on comparing the $LT_{50}$ data obtained on samples kept in the dark on the one hand and exposed to illumination on the other, the increase of the benzoic acid derivative content results in a decrease of the said difference.

On samples exposed to illumination (light) a difference can be detected between the $LT_{50}$ value of a sample containing no stabilizer and that of the sample containing the lowest amount of the stabilizer. This difference becomes larger as the stabilizer content is increased. This clearly proves that the light decomposes an increasingly smaller ratio of the active ingredient.

It has also been found that in addition to the inhibition of the photodegradation of the active ingredient, the stabilizer of the present invention also increases the insecticidal activity. This manifests itself in the increase of the toxic effect which is particularly important against store-room pests killed with aerosols. Thus if cockroaches or flies are not immidiately killed they can fall during their struggle e.g. into the food and may thus cause infection; moth flies can lay eggs quite shortly before their death.

As the pyrethroid component non-photostable or relatively photostable pyrethroids can both be used. It is preferred to use as pyrethroidal active ingredient

0.01-90 % (e.g. 0.05-50 %) by weight of tetramethrin and/or permethrin and/or cypermethrin and/or bioresmethrin or a combination of more than one of the said components. Other pyrethroids which may be used are phenothrin, deltamethrin and fenvalerate.

As photostabilizer or synergistic component (promoter), a wide range of the compounds of the general formula I can be used. Thus it is preferred to use a $C_{1-12}$ (e.g. $C_{1-4}$) alkyl ester, a $C_{2-4}$ alkyl diol ester, the phenyl and/or benzyl ester of salicylic acid or a mixture thereof. The most suitable stabilizer can be chosen according to the pyrethroid and other additives used and the method of application.

Preferred representatives of the compounds of the general formula I are the following derivatives: cis-hexenyl-salicylate, ethylene glycol monosalicylate, chloro salicylic acid, phenyl salicylate, benzyl salicylate, methyl salicylate, amyl salicylate, dodecyl salicylate, triethylene glycol monosalicylate.

The compound of formula (I) is preferably used in an amount of 0.02-6 (e.g. 0.04-5) parts by weight per part by weight of the pyrethroid compound(s).

According to the present invention there are also provided compositions comprising in addition to the pyrethroidal active ingredient one or more acaricidal and/or fungicidal and/or further insecticidal ingredient(s).

It is advantageous to combine the pyrethroid with an insecticidal active ingredient of another type in order

to delay resistance, broaden the activity spectrum and prolong the effect. The use of fungicidal or acaracidal agents in addition to the insecticidal components provides complex protection and thus the control of pests can be carried out in a single operation step.

As insecticidal active ingredient it is preferred to use 0.01-6 parts by weight of an organic phosphoric acid ester - preferably propetamphos and/or bromophos and/or DDVP - per part by weight of the pyrethroid. Together with the said insecticidal component (or per se) 0.01-6 parts by weight of a carbamate derivative - per part by weight of the pyrethroid - can be added. For this purpose propoxur, bendiocarb or dimethylan can for example be used.

As acaracidal agent, oxamyl and/or malathion are preferably used, in an amount of 0.01-6.parts by weight per part by weight of the pyrethroid.

According to a preferred embodiment of the present invention, the fungicidal ingredient may be one which exhibits its fungicidal effect on fungi appearing at the time of insecticidal pyrethroidal treatment and thus provide complex protection. For this purpose benzimidazole derivatives are preferably used, particularly 0.1-10 parts by weight of carbomethoxy-benzimidazole or benomyl. Together with these compounds, (or per se) ephosite-aluminium or other fungicides can also be used. The appropriate fungicide may be selected, according to whether the pyrethroid treatment is carried out for the disinfection of stables or for sanitary purposes.

The compositions may contain in addition to the above components further additives and/or auxiliary agents such as

carriers, diluents and surface active agents.

Suitable auxiliary agents are selected on the basis of the character of the composition. In the case of ready-for-use liquid insecticidal compositions it is not always necessary to add an auxiliary agent. Thus cereals can be treated against corn weevil with a solution of the pyrethroid in an ortho-benzoic acid ester. In ULV compositions it is preferred to use an inert liquid diluent in order to provide accurate dosage.

Emulsifiable concentrates may contain an inert carrier (e.g. xylene, mineral oil fractions etc.) and preferably an emulsifier. For this purpose surfactant mixtures /‾e.g. Atlox 4873 + Atlox 1045 (Atlas Chem. Ind.)_7 can be used. Suspendable concentrates may comprise a solid carrier (e.g. China-clay) and a wetting agent (e.g. Renex 648, product of Atlas Chem. Ind.) and a dispersing agent (e.g. Tamol manufactured by N. Rohm and Haas GmbH).

Coatings or varnishes (e.g. various insecticidal lacquers may comprise a liquid diluent (e.g. xylene) and a film-forming polymer (e.g. polyvinyl acetate).

The aerosols may comprise a suitable liquid diluent (e.g. an aliphatic alcohol, methylene chloride, mineral oil fractions, water), a propellant (e.g. Freon, propane--butane, carbon dioxide). Water-based aerosols may comprise an emulsifier (e.g. Atlox 8916P, manufactured by Atlas Chem. Ind.) as well.

The dusting powders may comprise a mineral carrier (e.g. talc), and a deactivator to improve the chemical stability of the active ingredient (e.g. hexamethylene-

tetramine).

The compositions may also contain - depending on the character thereof - in a concentration lower than the usual value further synergists (e.g. piperonyl butoxide), further sterilizers (e.g. epichlorohydrin), antioxidants (e.g. butyl hydroxy toluene, methyl hydroxy anisole). The latter components may also increase the synergistic effect of the benzoic acid derivative of the general formula I.

The physical or chemical details and the mechanism of the photostabilising effect of the benzoic acid derivatives of the general formula I are not exactly known. It is possible that the compounds of the general formula I protect the active ingredient by light adsorption. It can be also be presumed that the compounds of the general formula I inhibit by their own light absorption the formation of photolysis products decomposing the pyrethroid molecule from the substances absorbed from the air on the toxic area or aerosol particles formed from the compositions (e.g. vapour, carbon dioxide). Since the benzoic acid derivatives can exhibit their photodegradation inhibiting effect even at a very low concentration it is most likely that the compounds of the general formula I promptly react with the substances absorbed in the composition which are responsible for the rapid degradation of the active ingredient (e.g. water, carbon dioxide, oxygen etc.), bind the said substances and thus exert a protecting effect.

As already mentioned above the benzoic acid

derivatives of the general formula I exhibit a favourable effect on the biological activity of pyrethroids and particularly improve the toxic effect. According to our presumption the said synergistic effect may be due to the fact that the compounds of the general formula I make the chitin cover of the insects more permeable and inhibit the enzymes playing an important role in detoxification.

According to a further feature of the present invention there is provided an insecticidal treatment carried out by using compositions comprising a pyrethroid derivative stabilized and synergized with a benzoic acid derivative of the general formula I. The said treatment can be carried out by usual and conventional methods. Thus the composition can be applied on the plants and can be used directly against stationary insects or against flying insects.

The advantage of the present invention is that it increases the stability of the potent pyrethroids and thus enables the more widespread use thereof. This facilitates the organization of work as well.

The compounds of the general formula I are known (Ullmann Enzykl. der Techn. Chemie XIII. page 80).

Further details of the present invention are to be found in the following Examples without limiting the scope of protection to the said Examples.

Example 1

Oily spray

5 % by weight of permethrin, 10 % by weight of oxamyl, 1 % by weight of cis-hexenyl-salicylate and 1 % by weight of butyl-hydroxy-toluene are dissolved in 20 parts by weight of piperonyl butoxide at a temperature not exceeding 40 C$^{C}$ and the solution is homogenised with 83 % by weight of paraffin oil.

The composition can be effectively used after dilution with rape oil and applied in the form of a cold mist against pests of glass-houses or foil tents, particularly against infections jointly caused by glass-house moth-louse (Triolenrodes raporariorum) and double-spotted red spider mite (Tetranychus urticae).

Example 2

Emulsifable concentrate

2 % by weight of fenvalerate, 10 % by weight of piperonyl butoxide and 20 % by weight of ethylene glycol monosalicylate are homogenised with 10 % by weight of a POE-sorbitol-hexaoleate emulsifier at 50 C$^{O}$ and dissolved in 58 % by weight of xylene. The emulsifable concentrate thus obtained can be emulsified in water and may be used in this form against several plant insect pests - particularly Autographa gamma, Eupoecilia ambiguella, Myzus persicae. (POE = polyoxyethylene).

Example 3

Wettable powder

1 % by weight of permethrin, 20 % by weight of benomyl, 25 % by weight of piperonyl butoxide and 5 % by weight of chloro salicylic acid are admixed with 5 % of an aqueous polyvinyl pyrrolidone solution. The pasty product is dried and finely ground with 2 % by weight of colloidal silicon dioxide and 23 % by weight of talc. After grinding the mixture is homogenized with 10 % by weight of a POE-(6)-tridecyl alcohol wetting agent.

The composition can be diluted with water to provide a suspension which can be effectively used to control the infections jointly caused by insects and fungi on trees.

Example 4

Dusting powder

0.1 % by weight of bioresmethrin, 0.3 % by weight of propoxur, 1 % by weight of ethylene glycol monosalicylate, 0.5 % by weight of butyl hydroxy toluene and 0.4 % by weight of piperonyl butoxide are homogenised at 40 $C^{o}$ and admixed with 97.7 % by weight of bentonite in a ball mill. Thus a ready-for-use homogenous dusting powder is obtained which can be particularly used against crawling insects (e.g. Blattella germanica, Monomorium pharaonsis).

Example 5

Aerosol

0.2 % by weight of tetramethrin and 0.01 % by weight of butyl hydroxy toluene are dissolved in 0.4 % by weight of piperonyl butoxide and 2.0 % by weight of phenyl salicylate and homogenised with 39.39 % by weight of odourless mineral oil. The solution thus obtained is filled into aerosol flasks, closed and 60 % by weight of a propellant - Freon 12 - is introduced. The aerosol thus obtained is suitable for the killing of domestic flying insects - preferably Musca domestica - in closed areas.

Example 6

Emulsion

0.3 % by weight of cypermethrin, 0.3 % by weight of benzyl salicylate and 0.1 % by weight of butyl hydroxy toluene are dissolved in 15 % by weight of anhydrous ethanol whereupon the solution thus obtained is admixed with a solution of 20 % by weight of dimethyl carboxymethyl coconut fatty acid propylamido-ammonium-betaine in 62.3 % by weight of water. The ready-for-use emulsion thus obtained can be applied to the scalp and acts as an anti-louse (Pediculus humanus vestimenti) shampoo having long-lasting activity.

Example 7

Paste, cream

1.0 % by weight of cypermethrin, 0.1 % by weight of phenyl salicylate and 0.5 % by weight of butyl hydroxy toluene are homogenised with in 14 % by weight of Carbowax 400 at 40 C°, whereupon 10 % by weight of glycerol are added. 74.74 % by weight of water are added under intensive stirring. Thus a ready-for-use ointment is obtained which is particularly suitable for the treatment of animals infected by scab mite (Sarcoptes suis, Otodectes cynotis).

Example 8

ULV (ultra low volume) formulation

0.05 % by weight of deltamethrin are dissolved in 0.5 % by weight of ethylene glycol monosalicylate whereupon 1 % by weight of sorbitane trioleate is added under stirring and the mixture is dissolved in 98.45 % by weight of paraffin oil. The composition is suitable for ULV spraying - particularly for the control of Anopheles maculipennis from aeroplanes.

Example 9

Smoke-stick and coil

5 % by weight of tetramethrin, 1 % by weight of dichlorvos and 0.5 % by weight of triethylene glycol monosalicylate are applied onto a mixture of 24 % by weight of potassium chlorate, 16 % by weight of potassium

carbonate, 5 % by weight of starch and 5 % by weight of carboxy methyl cellulose and homogenised with 43.5 % by weight of cellite. From the product thus obtained a paste is prepared with water which is brought to the desired form and dried. The composition is slowly burnt and can continuously kill and repel flying insects (Musca domestica, Culex pippiens).

Example 10

Formation of cold mist in glass-house

The composition according to Example 1 is applied onto tomato sprouts in a glass-house at a dosage of 1.6 l/ha. The composition keeps the glass-house moth-louse and double-spotted red spider mite population at a level of 0-5 % for 14 days. As control the same composition but containing no cis-hexenyl salicylate is used in the same dose. In the control test the glass-house moth-louse population amounts to 30 % on the 8th day while the double spotted red spider mite population reaches the value of 30 % on the 10th day.

Example 11

Animal bath

The composition according to Example 6 is diluted with water in a ratio of 1:40 and used to kill the water--sucking flies and other insect parasites of cattle kept in open-air. On spraying the body of the animals with 0.5 l of the solution, the treatment provides effective

protection for 4 weeks. During this time the tormenting insects avoid the cattle. As control the same composition but containing no benzyl salicylate is used in the same concentration. The duration of the effect is only 2 weeks.

Example 12

Killing of cockroaches

The composition according to Example 4 is used by the strip-treatment method in humid rooms of flats infected by cockroaches. Two consecutive treatments carried out within 6 weeks result in complete killing of the cockroaches. As control compositions containing no ethylene glycol monosalicylate are used. In the control test the new cockroach generation re-appears after 4 weeks.

Table 1

Photostability of mixtures of various pyrethroids and ethylene glycol monosalicylate

Active ingredient concentration: 140 /ug/$cm^2$

| ratio of active ingredient to ethylene glycol monosalicylate | LT 50 value, minute | | | | | | | |
|---|---|---|---|---|---|---|---|---|
| | tetramethrin | | bioresmethrin | | permethrin | | cypermethrin | |
| | dark | light 15 minutes | dark | light 1 hour | dark | light 2 hours | dark | light 2 hours |
| 1:0 | 2.31 | 12.9 | 2.77 | 13.2 | 3.77 | 20.0 | 3.31 | 22.7 |
| 25:1 | 1.82 | 9.67 | - | 4.54 | 2.95 | 15.0 | 2.66 | 19.6 |
| 5:1 | 1.82 | 5.01 | - | 4.08 | 4.22 | 9.28 | 1.97 | 8.06 |
| 1:1 | 1.83 | 1.70 | - | 3.11 | 3.45 | 3.93 | 1.89 | 1.88 |
| 1:5 | 1.74 | 1.41 | - | 2.11 | 2.54 | 3.06 | 1.54 | 1.74 |

Table 2

Photostability of mixtures of various pyrethroids and ethylene glycol monosalicylate

Active ingredient concentration: 28 $\mu g/cm^2$

| ratio of active ingredient to ethylene glycol monosalicylate | LT 50 value, minutes | | | | | |
|---|---|---|---|---|---|---|
| | bioresmethrin | | permethrin | | cypermethrin | |
| | dark | light 1 hour | dark | light 2 hours | dark | light 2 hours |
| 1:0 | 4.56 | 78.1 | 7.09 | 116 | 6.58 | 32.7 |
| 25:1 | - | 46.4 | 7.62 | 63.7 | 5.66 | 22.3 |
| 5:1 | - | 22.7 | 6.79 | 46.5 | 4.65 | 16.2 |
| 1:1 | - | 15.2 | 6.57 | 15.5 | 4.48 | 14.6 |
| 1:5 | - | 4.47 | 5.12 | 7.18 | 4.09 | 4.57 |

Table 3

Photostability of mixtures of tetramethrin and benzyl salicylate

Exposure time: 30 minutes, mercury vapour lamp

| tetramethrin:benzyl salicylate ratio | active ingredient concentration 140 /um/cm² | | 28 /ug/cm² | |
|---|---|---|---|---|
| | L T 50 value | | | |
| | dark | light | dark | light |
| 1:0 | 2.95 | 24.1 | 6.30 | 44.4 |
| 25:1 | 2.76 | 25.3 | 6.34 | 41.1 |
| 5:1 | 2.14 | 6.07 | 4.35 | 31.4 |
| 1:1 | 2.15 | 4.02 | 3.72 | 10.9 |
| 1:5 | 1.33 | 1.87 | 2.16 | 4.44 |

Table 4

$LT_{50}$ values of mixtures of tetramethrin and phenyl salicylate

Exposure time: 30 minutes, mercury vapour lamp

| tetramethrin:phenyl-salicylate ratio | active ingredient concentration 140 /ug/cm² LT 50 value dark | light | 28 /ug/cm² dark | light |
|---|---|---|---|---|
| 1:0 | 3.60 | 48.77 | 7.32 | 63.04 |
| 25:1 | 2.96 | 33.04 | 4.71 | 51.81 |
| 5:1 | 1.44 | 27.25 | 4.68 | 47.24 |
| 1:1 | 0.83 | 5.89 | 3.83 | 23.99 |
| 1:5 | 0.71 | 1.53 | 2.90 | 4.49 |

Table 5

$LT_{50}$ values of mixtures of tetramethrin and *cis*-hexenyl-salicylate

Exposure time: 30 minutes, mercury vapour lamp

| tetramethrin: *cis*-hexenyl-salicylate ratio | active ingredient concentration 140 $\mu g/cm^2$ | | 28 $\mu g/cm^2$ | |
|---|---|---|---|---|
| | $LT_{50}$ value | | | |
| | dark | light | dark | light |
| 1:0 | 3.52 | 92.60 | 8.39 | 97.38 |
| 25:1 | 2.39 | 75.51 | 5.65 | 52.61 |
| 5:1 | 1.59 | 17.53 | 4.45 | 61.64 |
| 1:1 | 1.55 | 2.54 | 2.65 | 44.28 |
| 1:5 | 1.00 | 0.79 | 1.73 | 19.00 |

CLAIMS:

1. An insecticidal composition comprising at least one pyrethroid compound as active ingredient and optionally further active ingredient(s) and additive(s) characterized in that the composition comprises as photostabilizer and synergistic component a benzoic acid derivative of the general formula I

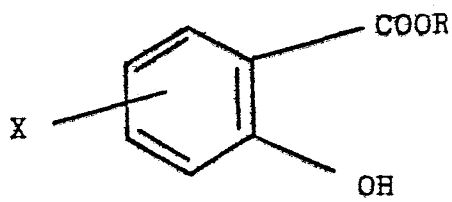

(I)

wherein

R is hydrogen; $C_{1-20}$ alkyl; $C_{2-8}$ alkenyl;

a group of the general formula

$$-[(CH_2)_nO]_mH$$

where m is 2 to 4; or a group of the general formula II

$-(CH_2)_n$ 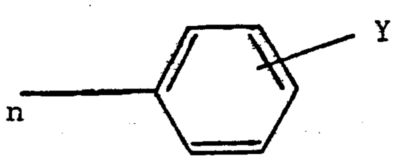

(II)

X and Y are hydrogen, halogen, nitro or $C_{1-4}$ alkyl and n is 0 to 6.

2. A composition according to claim 1 which contains 0.01 - 90 % by weight of the pyrethroid compound(s) and 0.01 - 10 parts by weight of the compound of formula I per part of pyrethroid compound(s).

3. A composition according to claim 2 which contains 0.05 - 50 % by weight of the pyrethroid compound(s).

4. A composition according to claim 1 in which the pyrethroid is tetramethrin, bioresmethrin, phenothrin , permethrin, cypermethrin, deltamethrin or fenvalerate.

5. A composition according to any preceding claim in which the compound of formula I is a $C_{1-12}$ alkyl ester, $C_{2-4}$ alkylenediol ester, phenyl ester or benzyl ester of salicyclic acid.

6. A composition according to any preceding claim in which the compound of formula I is <u>cis</u>-hexenyl salicylate, ethylene glycol monosalicylate, chlorosalicylic acid, phenyl salicylate, benzyl salicylate, methyl salicylate, amyl salicylate, dodecyl salicylate or triethylene glycol monosalicylate.

7. A composition according to any preceding claim comprising as further active ingredient an acaricide and/or fungicide and/or further insecticide.

8. A composition according to claim 7 which contains 0.01 - 6 parts by weight (per part of pyrethroid compound) of propetamphos and/or bromophos and/or DDVP and/or other organic phosphoric acid ester insecticide, and/or propoxur or other carbamate insecticide; 0.01 -6.0

parts by weight of oxamyl and/or malathion per part by weight of the pyrethroid compound; or 0.1 - 10 parts by weight of benomyl and/or ephosite-aluminium per part by weight of the pyrethroid compound.

9. A composition according to any preceding claim which contains 0.1 - 10 parts by weight of piperonyl butoxide or other further synergistic component and/or 0.01 - 2.0 parts by weight of butyl-hydroxy-toluene or other antioxidant per part by weight of the pyrethroid compound.

10. A composition according to any preceding claim in the form of a liquid composition, oily spray, emulsion, emulsifiable concentrate, wettable powder, dusting powder, aerosol, cream, ultra low volume liquid composition or smoke stick or coil.

11. A method of controlling insects which comprises applying a composition according to any preceding claim to a selected location.

12. A method of preparing a composition according to any of claims 1 to 10 which comprises admixing the pyrethroid compound(s) with the compound of formula I.

European Patent Office

# EUROPEAN SEARCH REPORT

0147947

Application number

EP 84 30 8151

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X,D | US-A-4 056 610 (MINNESOTA MINING AND MANUFACTURING CO.)<br>* Column 7, lines 32-38, 50-51 * | 1-12 | A 01 N 25/22<br>A 01 N 53/00 //<br>(A 01 N 53/00<br>A 01 N 37:48<br>A 01 N 37:40 ) |
| X | FR-A-2 533 416 (ROUSSEL-UCLAF)<br>* Page 5, lines 1-2 * | 1-12 | |
| X | FR-A-1 274 205 (THE PYRETHRUM BOARD OF KENYA)<br>* Page 5, abstract, point 2b * | 1-12 | |
| | | | TECHNICAL FIELDS SEARCHED (Int. Cl.4) |
| | | | A 01 N |

The present search report has been drawn up for all claims

| Place of search | Date of completion of the search | Examiner |
|---|---|---|
| THE HAGUE | 08-03-1985 | DECORTE D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document